# FASCICULE DE BREVET EUROPEEN

(11) **EP 3 870 833 B1**
(45) Date de publication et mention de la délivrance du brevet: **05.10.2022**
(21) Numéro de dépôt: 19809134.0
(22) Date de dépôt: 17.10.2019
(51) Int. Cl.: F03C 1/047, B60K 7/00

(54) **MOTEUR HYDRAULIQUE AMÉLIORÉ POUR ROUE DIRECTRICE DE VÉHICULE**
VERBESSERTER HYDRAULISCHER MOTOR FÜR EIN LENKBARES RAD EINES FAHRZEUGS
IMPROVED HYDRAULIC MOTOR FOR A STEERED WHEEL OF A VEHICLE

(30) Priorité: 23.10.2018 FR 1859780
(43) Date de publication de la demande: 01.09.2021
(73) Titulaire: Poclain Hydraulics Industrie, 60410 Verberie (FR)
(72) Inventeur: FREY, Adam, 60410 VERBERIE (FR); VIDAL, Stéphane, 60410 VERBERIE (FR); WEBER, Nicolas, 60410 VERBERIE (FR); MICHON, Sylvain, 60410 VERBERIE (FR); SINGH, Jasraj, 60410 VERBERIE (FR)
(74) Mandataire: Cabinet Beau de Loménie
(86) Numéro de dépôt international: PCT/FR2019/052468
(87) Numéro de publication internationale: WO 2020/084228

(56) Documents cités:
- EP-A1- 2 295 275
- EP-A1- 3 012 141
- FR-A1- 3 030 382
- US-A1- 2001 003 948

## Description

### DOMAINE DE L'INVENTION

La présente invention concerne les machines hydrauliques, et plus précisément une structure améliorée de machine hydraulique.

### ETAT DE LA TECHNIQUE ANTERIEURE

Les machines hydrauliques, et en particulier les moteurs hydrauliques employés pour l'entrainement de roues directrices d'un véhicule doivent répondre à plusieurs contraintes spécifiques en termes de compacité, et doivent pouvoir être associés à des moyens de fixation d'une roue.

On connait ainsi des moteurs hydrauliques tels que présentés dans le document FR 2693154, qui présente un moteur hydraulique entraînant une roue directrice de véhicule. Le moteur tel que présenté est monté tournant au moyen de roulements disposés selon un montage en O entre la fusée de roue et le moteur hydraulique. Les éléments formant le moteur hydraulique sont disposés entre l'axe de pivot et les roulements. Une telle architecture peut être problématique pour des applications dans lesquelles la fusée de roue doit être très proche du pivot de direction. Un autre moteur hydraulique est par exemple connu du document EP 3 012 141 A1.

On connait également des architectures dans lesquelles les roulements sont disposés de part et d'autre du moteur hydraulique, et de part et d'autre de l'axe du pivot de direction. Le bloc cylindre est alors monté du côté opposé à la fusée de roue par rapport à l'axe de pivot, et une entretoise est interposée entre le bloc cylindres et le roulement adjacent. Bien que permettant de réaliser une structure avec un arbre court, une telle architecture est cependant contraignante en termes d'encombrement au niveau du support de pivot, entraînant ainsi une augmentation de la longueur du pivot de direction, ce qui peut être pénalisant pour certaines applications.

On cherche ainsi à concilier les exigences en termes d'encombrement, de possibilité de fixation d'une roue, et de reprise d'efforts pour un tel moteur de roue.

### PRESENTATION DE L'INVENTION

La présente invention vise ainsi à répondre au moins partiellement à ces problématiques.

Le présent exposé concerne un ensemble comprenant un appareil hydraulique comprenant un rotor et un stator, le rotor étant monté tournant par rapport au stator selon un second axe de rotation au moyen d'un roulement proximal et d'un roulement distal, l'appareil hydraulique comprenant un arbre, une came multilobes, un bloc cylindres présentant une pluralité de logements chacun muni d'un piston monté coulissant en regard de la came multilobes, et un distributeur comprenant un noyau et un carter de distribution,
un élément de pivot destiné à être monté sur un essieu, et mobile en rotation par rapport à l'appareil hydraulique selon un premier axe de rotation, le stator étant monté tournant par rapport à l'essieu selon le premier axe de rotation,
le rotor comprenant l'arbre présentant une extrémité proximale munie de moyens permettant le montage d'une roue de véhicule, et une extrémité distale opposée,
le bloc cylindres est positionné entre le premier axe de rotation et le roulement proximal selon la direction définie par le second axe de rotation, et en ce que
en vue en projection selon un plan défini par le second axe de rotation et parallèle au premier axe de rotation, le roulement proximal et le roulement distal sont positionnés au moins partiellement de part et d'autre du premier axe de rotation.

Selon un exemple, le distributeur, ou plus précisément le noyau du distributeur, est positionné entre le bloc cylindres et le roulement distal selon le second axe de rotation.

Selon un exemple, les projections de l'élément de pivot et du roulement distal en vue selon un plan défini par le second axe de rotation et parallèle au premier axe de rotation sont au moins partiellement superposées. Selon un exemple, l'élément de pivot comprend une pluralité de conduits hydrauliques aménagés en son sein, de manière à permettre une alimentation en fluide hydraulique du distributeur.

Selon un exemple, le roulement proximal (5A) et le roulement distal sont agencés selon un montage en O.

Le bloc cylindres est alors typiquement configuré de manière à exercer un effort tendant à déplacer l'arbre depuis son extrémité distale vers son l'extrémité proximale, et dans lequel le roulement distal comprend une bague interne et une bague externe entre lesquelles sont disposées une pluralité de rouleaux tronconiques, la bague externe du roulement distal étant montée en appui contre un segment de carter, de manière à s'opposer audit déplacement de l'arbre.

En variante, le roulement proximal et le roulement distal sont agencés selon un montage en X.

Le roulement proximal comprend alors typiquement une bague interne et une bague externe entre lesquelles sont disposées une pluralité de rouleaux tronconiques et dans lequel le bloc cylindres est configuré de manière à exercer un effort tendant à déplacer la bague interne du roulement proximal dans un sens allant de l'extrémité distale vers l'extrémité proximale de l'arbre, la bague externe du roulement proximal étant montée en appui contre un segment de carter , de manière à s'opposer audit déplacement.

Le présent exposé concerne également un véhicule comprenant un essieu et présentant deux roues directrices, lesdites deux roues directrices étant chacune montée sur un ensemble tel que défini précédemment solidaire de l'essieu.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- les figures 1 et 2 représentent un exemple d'ensemble selon un aspect de l'invention,
- les figures 3 et 4 représentent deux vues d'un autre exemple d'ensemble selon un aspect de l'invention,
- la figure 5 présente une variante de l'exemple représenté sur la figure 2.

Sur l'ensemble des figures, les éléments similaires sont repérés par des références numériques identiques.

### DESCRIPTION DETAILLEE D'EXEMPLES DE REALISATION

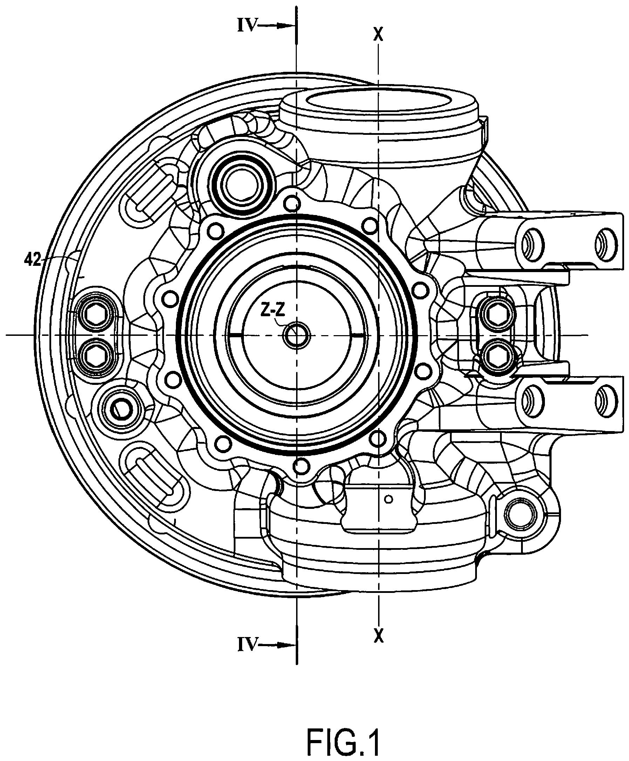

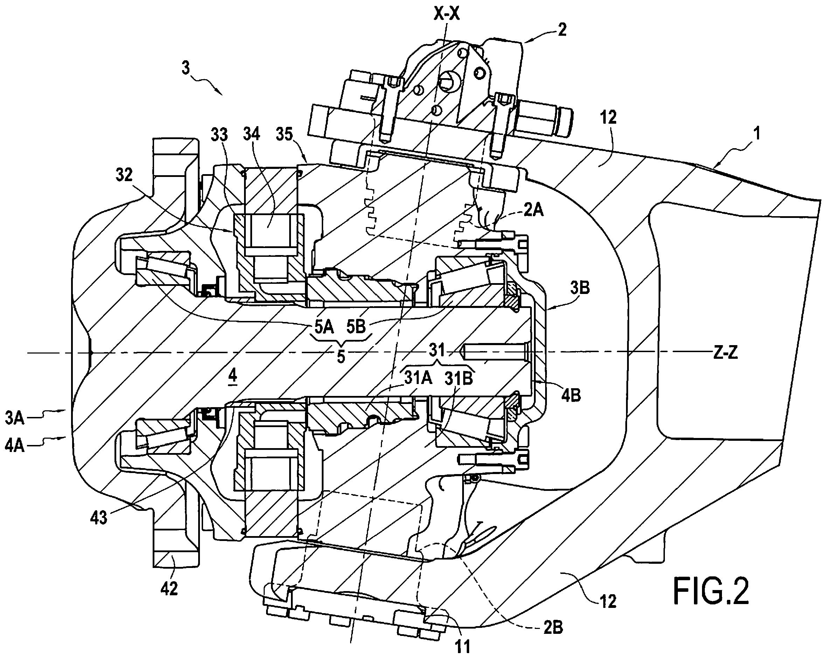

On décrit ci-après un premier mode de réalisation de l'invention en référence aux figures 1 et 2.

On représente sur ces figures un système comprenant un appareil hydraulique 3 couplé à un essieu 1 par l'intermédiaire d'un pivot 2. L'appareil hydraulique 3 est monté mobile par rapport à l'essieu 1 selon un premier axe de rotation X-X par l'intermédiaire du pivot 2. L'essieu 1 comprend typiquement deux bras 12 définissant une forme générale de C et formant un support pour le pivot 2.

L'appareil hydraulique 3 est par exemple un appareil hydraulique à pistons radiaux et came multilobes. A titre de variante, l'appareil hydraulique peut être un appareil à pistons axiaux, un appareil à palettes, un appareil à engrenages intérieurs ou extérieurs.

Il comprend ainsi un distributeur 31 formé d'un noyau 31a entouré d'un carter de distribution 31b, un bloc cylindres 32 comprenant une pluralité de cylindres s'étendant radialement par rapport à un second axe de rotation Z-Z et dans lesquels coulissent des pistons 33, et une came 34 multilobes disposée en regard des pistons 33. L'appareil hydraulique 3 comprend également un arbre 4 et un carter 35, dont des sections peuvent être formées notamment par la came 34 et par le carter de distribution 31b.

On définit pour l'appareil hydraulique 3 un ensemble d'éléments fixes ou stator, et un ensemble d'éléments tournants ou rotor. Dans l'exemple illustré, le rotor comprend l'arbre 4 et le bloc cylindres 32, tandis que le stator comprend la came 34, le carter 35 et le distributeur 31.

La liaison entre le rotor et le stator est réalisée via un palier 5 comprenant ici deux éléments de roulement 5A et 5B, ici des roulements coniques disposés selon un montage en O.

Par exemple le roulement 5A est un roulement lubrifié à la graisse et le roulement 5B est un roulement lubrifié à l'huile, notamment l'huile de l'appareil hydraulique 3. En variante les deux éléments de roulements 5A et B sont lubrifiés par l'huile et notamment l'huile de l'appareil hydraulique 3.

Comme visible notamment sur la figure 1, le premier axe de rotation X-X et le second axe de rotation Z-Z ne sont pas dans un même plan. Plus précisément, si on considère un plan P défini par le second axe de rotation Z-Z et parallèle au premier axe de rotation X-X, le premier axe de rotation X-X est alors hors de ce plan P, typiquement décalé d'une distance non nulle selon une direction perpendiculaire au plan P. Le plan P correspond au plan des figures 2, 4 et 5.

Cette configuration permet d'améliorer la compacité de l'ensemble, comme on le détaillera par la suite.

L'appareil hydraulique 3 comprend typiquement des moyens configurés pour permettre de porter une jante et un pneumatique de roue de véhicule. Dans l'exemple représenté, l'arbre 4 de l'appareil hydraulique 3 forme une fusée de roue, présentant une extrémité proximale 4A munie d'une portion s'étendant radialement et formant une zone de support pour la fixation d'une jante (non représentée). Dans l'exemple illustré, l'arbre 4 forme ainsi une fusée de roue comprenant un moyeu 42 à son extrémité proximale 4A pour la fixation d'une jante, l'extrémité opposée de l'arbre 4 formant ici une extrémité distale 4B. On définit ainsi de manière générale une extrémité proximale 3A de l'appareil hydraulique 3, et une extrémité distale 3B de l'appareil hydraulique 3. Dans l'exemple illustré, l'extrémité proximale 3A de l'appareil hydraulique 3 correspond à l'extrémité proximale 4A de l'arbre 4, tandis que l'extrémité distale 3B correspond à un couvercle venant coiffer l'extrémité distale 4B de l'arbre 4.

Dans l'exemple représenté, le pivot 2 relie le carter de distribution 31b (également appelée couvercle de distribution) à l'essieu 1 via deux liaisons pivot 2A et 2B alignées selon l'axe X-X de part et d'autre de l'appareil hydraulique 3. Pour des raisons de fabrication, la liaison pivot est réalisée entre le carter de distribution 31b et un élément de pivot 2 solidarisé à l'essieu 1, cet élément de pivot pouvant ainsi être réalisé avec des tolérances de fabrications plus fines que l'essieu 1.

L'une des liaisons pivot, en l'occurrence la liaison pivot supérieure 2A dans le mode de réalisation représenté sur les figures 1 et 2, comprend typiquement des conduits formant des lignes d'alimentation, d'échappement et de drain hydraulique pour l'appareil hydraulique 3 réalisées directement dans le pivot et reliées au distributeur 31 de l'appareil hydraulique 3.

L'autre des liaisons pivot 2B, ici la liaison pivot inférieure, peut notamment comprendre des moyens pour la formation de conduit pneumatique et/ou pour mesurer la rotation du pivot 2, par exemple un capteur de rotation, au sein du pivot, comme on le décrit ci-après.

En variante la liaison pivot supérieure 2A peut comprendre des moyens pour la formation de conduit pneumatique et/ou pour mesurer la rotation du pivot 2, par exemple un capteur de rotation, et la liaison pivot inférieure 2B comprend des conduits formant des lignes d'alimentation hydraulique pour l'appareil hydraulique 3, le fonctionnement demeurant inchangé.

La liaison pivot considérée permet une mise en rotation relative de l'appareil hydraulique 3 et de l'essieu 1 selon le premier axe de rotation X-X.

Les deux roulements 5A et 5B seront par la suite désignés comme étant le roulement proximal 5A et le roulement distal 5B, chacun étant plus proche de l'extrémité du même nom.

Le roulement proximal 5A et le roulement distal 5B sont positionnés de part et d'autre du bloc cylindres 32 et du distributeur 31 de l'appareil hydraulique 3, et sont agencés selon un montage en O comme déjà indiqué précédemment.

Dans l'exemple illustré, le roulement proximal 5A est interposé entre une partie du carter 35 et l'arbre 4, tandis que le roulement distal 5B est interposé entre l'arbre 4 et le carter de distribution 31b. De manière conventionnelle, chaque roulement 5A et 5B comprend une bague interne et une bague externe entre lesquelles sont disposés une pluralité de rouleaux tronconiques.

Pour le montage du roulement proximal 5A, la bague interne est montée en appui contre un épaulement, ici formé par l'arbre 4, formant une butée dans un sens allant de l'extrémité distale 3B vers l'extrémité proximale 3A. La bague externe est montée contre un épaulement formé par un segment du carter 35, formant une butée dans un sens allant de l'extrémité proximale 3A vers l'extrémité distale 3B.

Pour le montage du roulement distal 5B, la bague interne est montée en appui contre un épaulement, ici formé par un écrou ou par une cale réglable monté sur l'arbre 4, formant une butée dans un sens allant de l'extrémité proximale 3A vers l'extrémité distale 3B. La bague externe est montée contre un épaulement formé par un segment du carter 35, formant une butée dans un sens allant de l'extrémité distale 3B vers l'extrémité proximale 3A.

En vue en projection selon le plan P défini par le second axe de rotation Z-Z et parallèle au premier axe de rotation X-X, le roulement proximal 5A et le roulement distal 5B sont positionnés au moins partiellement de part et d'autre de la projection du premier axe de rotation X-X. Le bloc cylindres 32 est positionné entre le premier axe de rotation X-X et le roulement proximal 5A. Une telle configuration présente plusieurs avantages.

Cette configuration permet de concilier un encombrement réduit au niveau de la partie distale 3B de l'appareil hydraulique 3, tout en permettant de proposer un arbre 4 que l'on qualifie de court, c'est-à-dire avec une distance réduite entre le premier axe de rotation X-X et l'extrémité proximale 4A de l'arbre portant les moyens configurés pour permettre de porter une jante et un pneumatique de roue de véhicule, sans nécessiter d'accroître l'encombrement de l'appareil hydraulique 3 selon le premier axe de rotation X-X.

L'encombrement au niveau de l'extrémité distale 3B (qui forme ce que l'on qualifie d'arrière, par opposition à l'extrémité proximale 3A adaptée pour porter un pneumatique et qui forme l'avant du moteur de roue) est réduit, ce qui permet de simplifier la conception de l'essieu 1 et notamment des bras 12 de l'essieu 1 formant un support pour le pivot 2, et également de simplifier l'éventuelle intégration de conduites à l'arrière du moteur, par exemple des conduites d'alimentation pneumatique ou hydraulique si ces dernières ne sont pas réalisées directement au sein de du pivot 2.

Le roulement proximal 5A est typiquement isolé du volume interne de l'appareil hydraulique 3 (c'est-à-dire du volume délimité par le carter 35 dans lequel est disposé notamment le bloc cylindres 32) et du milieu externe par des moyens d'étanchéité dynamiques.

Dans l'exemple illustré, le bloc cylindres 32 est monté en appui contre une butée axiale formée sur l'arbre 4 au moyen d'une cale 43. Le bloc cylindres 32 est soumis à un effort de poussée exercé par le distributeur 31 (en l'occurrence le noyau 31a du distributeur 31) résultant de la mise en pression des différents conduits du distributeur 31. Cet effort est transmis par le bloc cylindres 32 sur l'arbre 4 via la cale 43 tendant à le déplacer dans une direction définie par le second axe de rotation Z-Z, depuis l'extrémité distale 4B vers l'extrémité proximale 4A.

Cet effort est alors repris par le roulement distal 5B, le montage en O des roulements 5A et 5B permettant de supporter la charge axiale.

Le distributeur 31 tel que représenté s'étend de part et d'autre du premier axe de rotation X-X en vue selon un plan défini par le second axe de rotation Z-Z et le premier axe de rotation X-X, et est typiquement configuré de manière à s'étendre essentiellement en direction de l'extrémité proximale 3A de l'appareil hydraulique 3, ce qui résulte notamment de la position du bloc cylindres 32 qui est positionné entre le distributeur 31 et le roulement proximal 5A. L'alimentation en fluide est ici réalisée directement au travers d'un élément du pivot 2 réalisant une alimentation en fluide de conduits aménagés dans le carter de distribution 31b comme déjà indiqué précédemment.

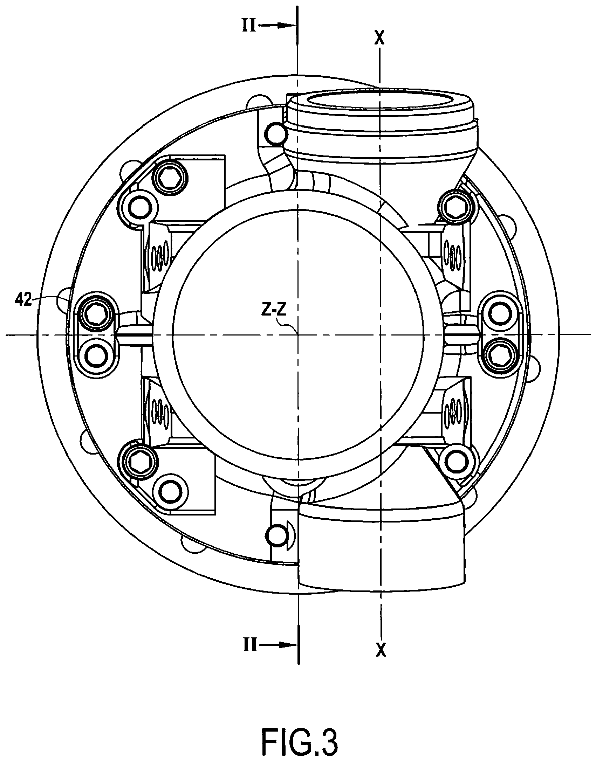

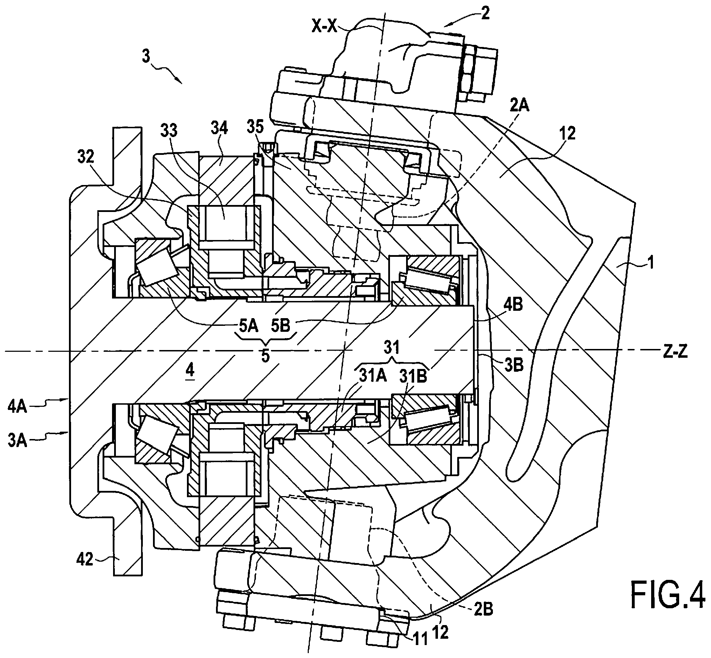

Les figures 3 et 4 représentent un autre mode de réalisation d'un ensemble selon l'invention.

On retrouve dans ce mode de réalisation plusieurs éléments déjà décrits en référence à la figure 1. On décrit ci-après uniquement les éléments distinctifs de ce mode de réalisation par rapport au mode de réalisation déjà décrit en référence à la figure 1.

Dans ce mode de réalisation, les deux éléments de roulements 5A et 5B sont disposés selon un montage en X.

Dans ce mode de réalisation, pour le montage du roulement proximal 5A, la bague interne est montée en appui contre une bague en appui sur l'arbre 4, formant une butée dans un sens allant de l'extrémité proximale 3A vers l'extrémité distale 3B. La bague externe est montée contre un épaulement formé par un segment du carter 35, formant une butée dans un sens allant de l'extrémité distale 3B vers l'extrémité proximale 3A.

Pour le montage du roulement distal 5B, la bague interne est montée en appui contre un épaulement, ici formé par l'arbre 4, formant une butée dans un sens allant de l'extrémité proximale 3A vers l'extrémité distale 3B. La bague externe est montée contre un épaulement formé par un segment du carter 35, formant une butée dans un sens allant de l'extrémité proximale 3A vers l'extrémité distale 3B.

Dans ce mode de réalisation, le bloc cylindres 32 est monté en appui contre la bague interne du roulement proximal 5A. Le bloc cylindres 32 est soumis à un effort de poussée selon le second axe de rotation Z-Z dans un sens allant de l'extrémité distale 3B vers l'extrémité proximale 3A exercé par le distributeur 31 (en l'occurrence le noyau 31a du distributeur 31) résultant de la mise en pression des différents conduits du distributeur 31. Cet effort est transmis par le bloc cylindres 32 au roulement proximal 5A, qui va reprendre cet effort du fait du montage en X des roulements 5A et 5B, le roulement proximal 5A va ainsi reprendre cet effort. En effet, l'effort tend à déplacer la bague interne du roulement proximal 5A (et donc l'arbre 4 contre laquelle elle est en appui) dans ce sens allant de l'extrémité distale 3B vers l'extrémité proximale 3A. La bague externe du roulement proximal 5A montée en appui contre le segment de carter 35 vient s'opposer à ce déplacement.

Le fonctionnement demeure inchangé par rapport au mode de réalisation déjà décrit en référence à la figure 1.

Comme déjà décrit en référence au mode de réalisation visible sur les figures 1 et 2, le premier axe de rotation X-X et le second axe de rotation Z-Z ne sont pas dans un même plan. Ce décalage est notamment visible sur la figure 3.

Tout comme le mode de réalisation déjà décrit en référence à la figure 1, ce mode de réalisation permet de concilier un encombrement réduit au niveau de la partie distale 3B de l'appareil hydraulique 3, tout en permettant de proposer un arbre 4 que l'on qualifie de court, c'est-à-dire avec une distance réduite entre le premier axe de rotation X-X et l'extrémité proximale 4A de l'arbre portant les moyens configurés pour permettre de porter une jante et un pneumatique de roue de véhicule, sans nécessiter d'accroître l'encombrement de l'appareil hydraulique 3 selon le premier axe de rotation X-X.

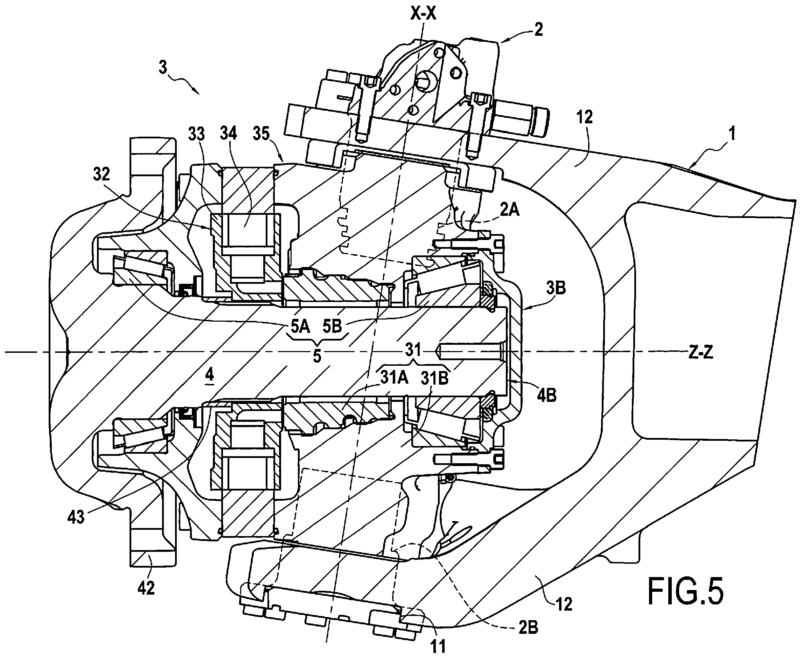

La figure 5 présente une variante du mode de réalisation représenté sur la figure 2 décrite précédemment.

Dans ce mode de réalisation, l'élément 2A de la liaison pivot 2 présente une dimension sensiblement supérieure à l'élément 2A de la liaison pivot 2 représenté précédemment en référence à la figure 4.

Comme on le voit sur cette figure, en vue en projection selon le plan P défini par le second axe de rotation Z-Z et parallèle au premier axe de rotation X-X, le roulement distal 5B et l'élément 2A du pivot 2 se superposent au moins partiellement. La projection de l'élément 2A du pivot 2 dans le plan P mentionné précédemment est visible en pointillés.

Une telle superposition est rendue possible par le fait que le premier axe de rotation X-X et le second axe de rotation Z-Z ne soient pas dans le même plan, comme déjà décrit précédemment et visible par exemple sur la figure 3.

Une telle configuration permet d'accroître la compacité du système, et/ou d'offrir plus de volume disponible pour le pivot 2, ce qui peut notamment être avantageux lorsque des conduits hydrauliques ou pneumatiques sont aménagés directement dans le pivot 2.

Une telle configuration avec superposition dans le plan P de la projection du roulement distal 5B et d'au moins un élément du pivot 2 peut également être réalisée avec des roulements formant un montage en X comme déjà présenté en référence aux figures 3 et 4.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Ensemble comprenant
un appareil hydraulique (3) comprenant un rotor et un stator, le rotor étant monté tournant par rapport au stator selon un second axe de rotation (Z-Z) au moyen d'un roulement proximal (5A) et d'un roulement distal (5B), l'appareil hydraulique (3) comprenant un arbre (4), une came multilobes (34), un bloc cylindres (32) présentant une pluralité de logements chacun muni d'un piston (33) monté coulissant en regard de la came multilobes (34), et un distributeur (31) comprenant un noyau (31a) et un carter de distribution (31b),
un élément de pivot (2) destiné à être monté sur un essieu (1), et mobile en rotation par rapport à l'appareil hydraulique (3) selon un premier axe de rotation (X-X), le stator étant monté tournant par rapport à l'essieu (1) selon le premier axe de rotation (X-X),
le rotor comprenant l'arbre (4) présentant une extrémité proximale (4A) munie de moyens permettant le montage d'une roue de véhicule, et une extrémité distale (4B) opposée,
**caractérisé en ce que**,
le bloc cylindres (32) est positionné entre le premier axe de rotation (X-X) et le roulement proximal selon la direction définie par le second axe de rotation (Z-Z), et **en ce que**
en vue en projection selon un plan défini par le second axe de rotation (Z-Z) et parallèle au premier axe de rotation (X-X), le roulement proximal (5A) et le roulement distal (5B) sont positionnés au moins partiellement de part et d'autre du premier axe de rotation (X-X).

2. Ensemble selon la revendication 1, dans lequel le noyau du distributeur (31a) est positionné entre le bloc cylindres (32) et le roulement distal (5B) selon le second axe de rotation (Z-Z).

3. Ensemble selon l'une des revendications 1 ou 2, dans lequel les projections de l'élément de pivot (2) et du roulement distal (5B) en vue selon un plan défini par le second axe de rotation (Z-Z) et parallèle au premier axe de rotation (X-X) sont au moins partiellement superposées.

4. Ensemble selon l'une des revendications 1 à 3, dans lequel l'élément de pivot (2) comprend une pluralité de conduits hydrauliques aménagés en son sein, de manière à permettre une alimentation en fluide hydraulique du distributeur (31).

5. Ensemble selon l'une des revendications 1 à 4, dans lequel le roulement proximal (5A) et le roulement distal (5B) sont agencés selon un montage en O.

6. Ensemble selon la revendication 5, dans lequel le bloc cylindres (32) est configuré de manière à exercer un effort tendant à déplacer l'arbre (4) depuis son extrémité distale (4B) vers son l'extrémité proximale (4A), et dans lequel le roulement distal (5B) comprend une bague interne et une bague externe entre lesquelles sont disposées une pluralité de rouleaux tronconiques, la bague externe du roulement distal (5B) étant montée en appui contre un segment de carter (35), de manière à s'opposer audit déplacement de l'arbre (4).

7. Ensemble selon l'une des revendications 1 à 4, dans lequel le roulement proximal (5A) et le roulement distal (5B) sont agencés selon un montage en X.

8. Ensemble selon la revendication 7, dans lequel le roulement proximal (5A) comprend une bague interne et une bague externe entre lesquelles sont disposées une pluralité de rouleaux tronconiques et dans lequel le bloc cylindres (32) est configuré de manière à exercer un effort tendant à déplacer la bague interne du roulement proximal dans un sens allant de l'extrémité distale (4B) vers l'extrémité proximale (4A) de l'arbre (4), la bague externe du roulement proximal (5A) étant montée en appui contre un segment de carter (35), de manière à s'opposer audit déplacement.

9. Véhicule comprenant un essieu (1) et présentant au moins une roue directrice, ladite roue directrice étant montée sur un ensemble selon l'une des revendications 1 à 8 solidaire de l'essieu (1).

## Patentansprüche

1. Anordnung, umfassend:
eine hydraulische Vorrichtung (3), die einen Rotor und einen Stator umfasst, wobei der Rotor in Bezug auf den Stator entlang einer zweiten Rotationsachse (Z-Z) mittels eines proximalen Wälzlagers (5A) und eines distalen Wälzlagers (5B) drehbar angebracht ist, wobei die hydraulische Vorrichtung (3) eine Welle (4), einen mehrlappigen Nocken (34), einen Zylinderblock (32), welcher eine Vielzahl von Aufnahmen aufweist, die jeweils mit einem Kolben (33) versehen sind, der gegenüber dem mehrlappigen Nocken (34) verschieblich angebracht ist, sowie einen Verteiler (31), welcher einen Kern (31a) und ein Verteilergehäuse (31b) umfasst, aufweist,
ein Drehgelenkelement (2), das dazu bestimmt ist, an einer Achse (1) angebracht zu werden, und das in Bezug auf die hydraulische Vorrichtung (3) entlang einer ersten Rotationsachse (X-X) drehbeweglich ist, wobei der Stator in Bezug auf die Achse (1) entlang der ersten Rotationsachse (X-X) drehbar angebracht ist,
wobei der Rotor die Welle (4) umfasst, die ein proximales Ende (4A), welches mit Mitteln versehen ist, die die Montage eines Fahrzeugrades ermöglichen, sowie ein gegenüberliegendes distales Ende (4B) aufweist,
**dadurch gekennzeichnet, dass**
der Zylinderblock (32) zwischen der ersten Rotationsachse (X-X) und dem proximalen Wälzlager in der durch die zweite Rotationsachse (Z-Z) definierten Richtung positioniert ist, und dass
in Projektionsansicht entlang einer Ebene, die durch die zweite Rotationsachse (Z-Z) definiert ist und parallel zu der ersten Rotationsachse (X-X) verläuft, das proximale Wälzlager (5A) und das distale Wälzlager (5B) wenigstens teilweise auf beiden Seiten der ersten Rotationsachse (X-X) positioniert sind.

2. Anordnung nach Anspruch 1, bei der der Kern des Verteilers (31a) zwischen dem Zylinderblock (32) und dem distalen Wälzlager (5B) entlang der zweiten Rotationsachse (Z-Z) positioniert ist.

3. Anordnung nach einem der Ansprüche 1 oder 2, bei der sich die Projektionen des Drehgelenkelements (2) und des distalen Wälzlagers (5B) in der Ansicht entlang einer Ebene, die durch die zweite Rotationsachse (Z-Z) definiert ist und parallel zu der ersten Rotationsachse (X-X) verläuft, wenigstens teilweise überlagern.

4. Anordnung nach einem der Ansprüche 1 bis 3, bei der das Drehgelenkelement (2) eine Vielzahl von in seinem Inneren angeordneten Hydraulikleitungen aufweist, um eine Versorgung des Verteilers (31) mit Hydraulik-Flüssigkeit zu ermöglichen.

5. Anordnung nach einem der Ansprüche 1 bis 4, bei der das proximale Wälzlager (5A) und das distale Wälzlager (5B) in einer O-Anordnung angeordnet sind.

6. Anordnung nach Anspruch 5, bei der der Zylinderblock (32) so ausgelegt ist, dass er eine Kraft ausübt, die dazu neigt, die Welle (4) von ihrem distalen Ende (4B) in Richtung ihres proximalen Endes (4A) zu bewegen, und bei der das distale Wälzlager (5B) einen Innenring und einen Außenring umfasst, zwischen denen eine Vielzahl von kegelstumpfförmigen Rollen angeordnet ist, wobei der Außenring des distalen Wälzlagers (5B) in Anlage gegen ein Gehäusesegment (35) angebracht ist, um sich der Bewegung der Welle (4) entgegenzusetzen.

7. Anordnung nach einem der Ansprüche 1 bis 4, bei der das proximale Wälzlager (5A) und das distale Wälzlager (5B) in einer X-Anordnung angeordnet sind.

8. Anordnung nach Anspruch 7, bei der das proximale Wälzlager (5A) einen Innenring und einen Außenring umfasst, zwischen denen eine Vielzahl von kegelstumpfförmigen Rollen angeordnet ist, und bei der der Zylinderblock (32) so ausgelegt ist, dass er eine Kraft ausübt, die dazu neigt, den Innenring des proximalen Wälzlagers in eine Richtung vom distalen Ende (4B) hin zum proximalen Ende (4A) der Welle (4) zu bewegen, wobei der Außenring des proximalen Wälzlagers (5A) in Anlage gegen ein Gehäusesegment (35) angebracht ist, um sich der Bewegung entgegenzusetzen.

9. Fahrzeug, das eine Achse (1) umfasst und wenigstens ein gelenktes Rad aufweist, wobei das gelenkte Rad an einer Anordnung nach einem der Ansprüche 1 bis 8, die mit der Achse (1) fest verbunden ist, angebracht ist.

## Claims

1. An assembly comprising
a hydraulic device (3) comprising a rotor and a stator, the rotor being mounted in rotation relative to the stator around a second axis of rotation (Z-Z) by means of a proximal rolling-element bearing (5A) and a distal rolling-element bearing (5B), the hydraulic device (3) comprising a shaft (4), a multi-lobe cam (34), a cylinder block (32) having a plurality of receptacles each equipped with a piston (33) mounted sliding relative to the multi-lobe cam (34), and a distributor (31) comprising a core (31a) and a distribution casing (31b),
a pivoting element (2) adapted to be mounted on an axle (1), and movable in rotation relative to the hydraulic device (3) around a first axis of rotation (X-X), the stator being mounted in rotation relative to the axle (1) around the first axis of rotation (X-X),
the rotor comprising the shaft (4) having a proximal end (4A) equipped with means allowing the mounting of a vehicle wheel, and an opposite distal end (4B),
**characterized in that**,
the cylinder block (32) is positioned between the first axis of rotation (X-X) and the proximal rolling-element bearing in the direction defined by the second axis of rotation (Z-Z), and **in that**
viewed in projection along a plane defined by the second axis of rotation (Z-Z) and parallel to the first axis of rotation (X-X), the proximal rolling-element bearing (5A) and the distal rolling-element bearing (5B) are positioned at least partially on either side of the first axis of rotation (X-X).

2. The assembly according to claim 1, wherein the core of the distributor (31a) is positioned between the cylinder block (32) and the distal rolling-element bearing (5B) along the second axis of rotation (Z-Z).

3. The assembly according to one of claims 1 or 2, wherein the projections of the pivoting element (2) and of the distal rolling-element bearing (5B) viewed along a plane defined by the second axis of rotation (Z-Z) and parallel to the first axis of rotation (X-X) are at least partially superimposed.

4. The assembly according to one of claims 1 to 3, wherein the pivoting element (2) comprises a plurality of hydraulic pipes provided within it, so as to allow hydraulic fluid supply to the distributor (31).

5. The assembly according to one of claims 1 to 4, wherein the proximal rolling-element bearing (5A) and the distal rolling-element bearing (5B) are arranged in an O assembly.

6. The assembly according to claim 5, wherein the cylinder block (32) is configured so as to exert a force tending to move the shaft (4) from its distal end (4B) to its proximal end (4A), and wherein the distal end (5B) comprises an internal ring and an external ring between which are positioned a plurality of frustoconical rollers, the external ring of the distal rolling-element bearing (5B) being mounted supported against a casing segment (35), so as to oppose said movement of the shaft (4).

7. The assembly according to one of claims 1 to 4, wherein the proximal rolling-element bearing (5A) and the distal rolling-element bearing (5B) are arranged in an X assembly.

8. The assembly according to claim 7, wherein the proximal rolling-element bearing (5A) comprises an internal ring and an external ring between which are positioned a plurality of frustoconical rollers and wherein the cylinder block (32) is configured so as to exert a force tending to move the internal ring of the proximal rolling-element bearing in a direction extending from the distal end (4B) to the proximal end (4A) of the shaft (4), the external ring of the proximal rolling-element bearing (5A) being mounted supported against a casing segment (35), so as to oppose said movement.

9. A vehicle comprising an axle (1) and having at least one steerable wheel, said steerable wheel being mounted on an assembly according to one of claims 1 to 8 integral with the axle (1).
